(19) **Europäisches Patentamt**
**European Patent Office**
**Office européen des brevets**

(11) **EP 3 450 951 B1**

(12) **FASCICULE DE BREVET EUROPEEN**

(45) Date de publication et mention
de la délivrance du brevet:
**18.03.2020 Bulletin 2020/12**

(51) Int Cl.:
$G01M\ 5/00^{(2006.01)}$  $G01M\ 11/08^{(2006.01)}$
$G01D\ 5/353^{(2006.01)}$  $G01L\ 1/24^{(2006.01)}$

(21) Numéro de dépôt: **18191578.6**

(22) Date de dépôt: **29.08.2018**

(54) **PROCÉDÉ DE DÉTERMINATION DES VARIATIONS DE CONTRAINTES AU COURS DU TEMPS D'UNE CONDUITE SOUS-MARINE DE TRANSPORT DE FLUIDES**

VERFAHREN ZUR BESTIMMUNG DER ZEITBEDINGTEN BELASTUNGSVERÄNDERUNGEN EINER UNTERWASSERLEITUNG FÜR DEN TRANSPORT VON FLUIDEN

METHOD FOR DETERMINING VARIATIONS IN STRESS OVER TIME OF AN UNDERWATER PIPELINE FOR TRANSPORTING FLUIDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2017 FR 1758047**

(43) Date de publication de la demande:
**06.03.2019 Bulletin 2019/10**

(73) Titulaire: **SAIPEM S.A.**
**78180 Montigny Le Bretonneux (FR)**

(72) Inventeur: **SUNDERMANN, Axel**
**91640 FONTENAY-LES-BRIIS (FR)**

(74) Mandataire: **Cabinet Beau de Loménie**
**158, rue de l'Université**
**75340 Paris Cedex 07 (FR)**

(56) Documents cités:
**FR-A1- 3 047 309 US-A1- 2015 285 626**
**US-A1- 2017 102 278**

**Description**

Arrière-plan de l'invention

La présente invention se rapporte au domaine général des conduites sous-marines de transport de fluide qui sont sujettes à déformation en dynamique. Elle concerne plus particulièrement les conduites pour le transfert d'hydrocarbures, par exemple de pétrole et de gaz, assurant une liaison fond-surface ou une liaison entre deux supports flottant.

Les conduites de liaison fond-surface ou de liaison entre deux supports flottant utilisées pour le transfert d'hydrocarbures, appelées ci-après « riser » en anglais, sont typiquement réalisées en remontant de manière continue des conduites préalablement posées au fond de la mer, directement vers un support flottant, par exemple en leur donnant une configuration de chaînette.

Les conduites qui sont ainsi remontées du fond pour former les risers doivent être réalisées au moyen de conduites flexibles lorsque la profondeur d'eau est inférieure à quelques centaines de mètres. Cependant, dès lors que la profondeur d'eau atteint et dépasse 800 à 1000m, les conduites flexibles sont remplacées par des conduites rigides constituées d'éléments de longueur unitaire de conduite qui sont soudés entre eux et réalisés dans un matériau résistant tel qu'en acier de forte épaisseur. Les risers rigides en matériau résistant, en configuration de chaînette sont communément appelés par le terme anglo-saxon « Steel Catenary Riser » ou SCR (signifiant « riser en acier en forme de chaînette »).

Ces conduites de liaison fond-surface ou de liaison entre deux supports flottant sont soumises au cours du temps à des variations de contraintes dynamiques qu'il est nécessaire de surveiller afin de prévenir tout risque de dégâts importants sur les conduites, voire de rupture de celles-ci. En pratique, les opérateurs de l'industrie pétrolière offshore calculent la durée de vie de leurs installations sous-marines, et en particulier de leurs conduites assurant une liaison fond-surface ou une liaison entre deux supports flottant, à partir des données océanographiques prélevées sur le lieu d'implantation du champ pétrolier. La détermination des variations de contraintes de ces conduites sous-marines permet de calculer les déformations et déplacements de la conduite, son état de fatigue et la mesure des ondulations de contraintes dues aux vibrations induites par le détachement de tourbillons (appelé « Vortex Induced Vibration » en anglais ou VIV).

Ces calculs sont généralement pessimistes pour minimiser les prises de risque et les installations sont le plus souvent déclarées à risque bien avant de l'être réellement pour des raisons de sécurité. De plus, ces calculs sont soumis à des vérifications de normes qui contiennent des coefficients de sécurité. L'emploi de ces normes permet alors à l'opérateur de soumettre son dossier de certification à un organisme de contrôle afin d'en effectuer une garantie vis-à-vis des autorités compétentes.

On connaît également la publication FR 3,047,308 qui décrit un procédé de surveillance du comportement thermomécanique d'une conduite sous-marine de transport de fluides sous pression et la publication FR 3,047,309 qui décrit un procédé et dispositif de surveillance du comportement mécanique d'une conduite sous-marine de transport de fluides sous pression, ces deux procédés mettant en œuvre des capteurs à fibres optiques.

On connaît aussi la publication US 2016/0161350 qui décrit un procédé de surveillance d'une conduite à partir d'une fibre optique disposée en hélice autour de la conduite et d'une pluralité de capteurs à réseau de Bragg placés dans la fibre optique. Cette installation permet de mesurer au niveau de chaque capteur à réseau de Bragg d'éventuelles déformations de la conduite (flexion, torsion, etc.). L'un des inconvénients de ce procédé de surveillance est qu'il limite les mesures aux positions des capteurs à réseau de Bragg et ne permet d'obtenir qu'un échantillonnage des déformations de la conduite, non une mesure sur toute la longueur de celle-ci.

On connaît encore la publication WO 2014/013244 qui décrit un procédé de surveillance de la position d'une structure utilisant un capteur à fibre optique réparti et une pluralité d'émetteurs acoustiques déployés à des positions connues dans la zone de la structure à surveiller. Ce procédé détermine un champ acoustique, et à partir des positions connues des émetteurs acoustiques, il en déduit des déplacements de la structure. Un tel procédé présente l'inconvénient principal qu'il est complexe à mettre en œuvre, notamment du fait que la correspondance entre le champ acoustique obtenu et les déplacements de la structure n'est pas directe.

US 2017/0102278 **décrit un procédé pour déterminer les déformations d'une structure.**

US 2015/0285626 **décrit un système de mesure d'une position 3D.**

Objet et résumé de l'invention

La présente invention a donc pour but principal de proposer un procédé de surveillance de la déformation en dynamique d'une conduite sous-marine qui ne présente pas les inconvénients précités.

Conformément l'invention, ce but est atteint grâce à un procédé de détermination des variations de contraintes au cours du temps d'une conduite sous-marine de transport de fluides **selon la revendication 1.**

Le procédé selon l'invention prévoit d'utiliser des capteurs à fibre optique comme une multitude de jauges de contraintes et de recourir à la technologie de la détection acoustique répartie (« distributed acoustic sensing » en anglais ou DAS) pour mesurer la variation de déformation axiale des fibres optiques. Cette technologie permet d'analyser les variations d'indices optiques le long des capteurs à fibre optique par analyse de la lumière réfléchie par réflexion Rayleigh (ces variations pouvant être dues à des variations de température et à des variations de contraintes dans le cœur de la fibre optique). A partir de calculs similaires à ceux de la théorie des poutres qui donne la relation entre les déformations axiales des capteurs à fibre optique et les déformations en chaque point de la conduite, il est alors possible de déterminer en temps réel les déplacements, les déformations, l'état de fatigue et les vibrations induites par détachement de tourbillons autour de la conduite en dynamique. En particulier, le procédé selon l'invention permet de disposer d'une correspondance directe entre les variations d'indices optiques le long des capteurs à fibre optique et les déformations de la conduite. De plus, la mesure des déformations de la conduite s'opère sur toute sa longueur, et pas uniquement sur certaines portions de celle-ci.

Ainsi, l'invention est remarquable en ce qu'elle combine l'installation de capteurs à fibre optique directement sur la conduite avec la mesure des variations de contraintes au cours du temps en chaque point de la conduite en utilisant la technologie DAS et avec le calcul des déplacements, déformations, état de fatigue et vibrations induites par détachement de tourbillons autour de la conduite en tout point de celle-ci.

Dans l'industrie pétrolière offshore, la mesure des déformations en dynamique des conduites assurant une liaison fond-surface ou une liaison entre deux supports flottant, et donc de la fatigue le long de celles-ci, permet aux opérateurs de surveiller l'intégrité structurelle et par conséquent de prolonger notablement la durée de vie de ces conduites avec un risque acceptable, ce qui permet de réaliser des économies significatives. Cette mesure permet également de localiser l'apparition due au phénomène de fatigue par sollicitations dynamiques de fissures des structures sous-marines afin d'intervenir de manière anticipée et ainsi de préserver le plus longtemps possible les installations.

De préférence, les capteurs à fibres optiques répartis sont installés en hélice autour de la conduite. Cette installation en hélice présente l'avantage de parvenir à une meilleure adhésion mécanique des capteurs à fibre optique sur la conduite.

Alternativement, les capteurs à fibres optiques répartis peuvent être installés en lignes droites autour de la conduite.

Le procédé peut comprendre en outre l'installation sur toute la longueur de la conduite d'au moins deux capteurs à fibre optique répartis supplémentaires pour améliorer la précision de la détermination des contraintes en chaque point de la conduite. La présence de ces capteurs à fibre optique permet de parvenir à un calcul plus précis et rigoureux des déformations en dynamique de la conduite.

Le procédé peut comprendre l'installation sur toute la longueur de la conduite d'au moins quatre capteurs à fibres optiques répartis dédiés à la mesure simultanée de trois degrés de liberté en rotation et d'un degré de liberté en déplacement de la conduite en chaque section transversale de celle-ci.

Le procédé peut comprendre en outre l'installation sur toute la longueur de la conduite d'un capteur de pression à fibre optique destiné à la mesure de la pression dans la conduite. Dans ce cas, le capteur de pression à fibre optique peut être disposé en ligne droite parallèlement à un axe longitudinal de la conduite ou en hélice autour de la conduite.

Le procédé peut comprendre en outre l'installation sur toute la longueur de la conduite d'un capteur de température à fibre optique destiné à la mesure de la température dans la conduite.

De préférence encore, le procédé comprend en outre la détermination des déplacements au cours du temps en chaque point de la conduite par intégrations temporelle et spatiale de la variation de déplacement mesuré du capteur à fibre optique situé sur la section correspondante du point de la conduite.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 représente de façon schématique une conduite équipée de capteurs à fibres optiques pour la mise en œuvre du procédé selon un premier mode de réalisation de l'invention ;
- la figure 2 représente de façon schématique une conduite équipée de capteurs à fibres optiques pour la mise en œuvre du procédé selon un deuxième mode de réalisation de l'invention ;
- la figure 3 représente de façon schématique une conduite équipée de capteurs à fibres optiques pour la mise en œuvre du procédé selon un troisième mode de réalisation de l'invention ; et
- la figure 4 représente de façon schématique une conduite équipée de capteurs à fibres optiques pour la mise en œuvre du procédé selon un quatrième mode de réalisation de l'invention.

Description détaillée de l'invention

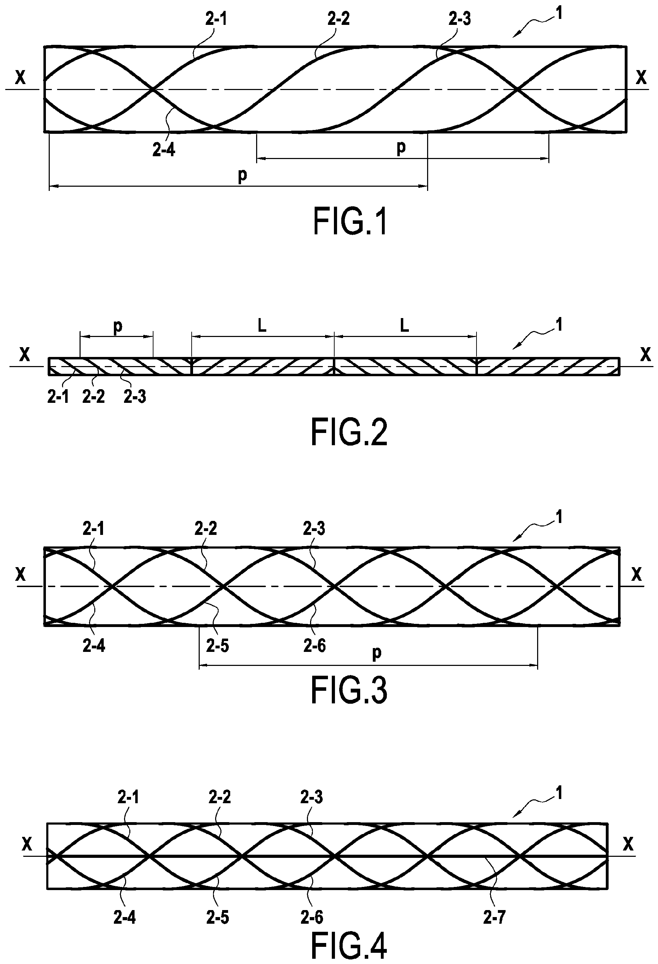

L'invention s'applique à toute conduite sous-marine (à simple ou à double enveloppe) de transport de fluides, notamment de pétrole et de gaz, assurant une liaison fond-surface ou une liaison entre deux supports flottant, telle que la conduite 1 représentée partiellement et de façon schématique sur la figure 1.

Le procédé selon l'invention propose de déterminer les variations de contraintes au cours du temps d'une telle conduite, c'est-à-dire de quantifier les déformations subies par la conduite en tout point de celle-ci et en temps réel.

A partir de l'obtention des variations de contraintes, il est possible d'en déduire de façon connue en soi l'état de fatigue de la conduite au cours du temps, les déformations subies par la conduite au cours du temps (par intégration temporelle des variations de contraintes), les déplacements de la conduite au cours du temps (par double intégration temporelle et spatiale des variations de contraintes), et les vibrations induites par le détachement de tourbillons (appelé « Vortex Induced Vibration » en anglais ou VIV).

A cet effet, selon l'invention, il est prévu d'installer autour de la conduite et sur toute sa longueur de celle-ci, au moins un capteur à fibre optique réparti utilisant la rétrodiffusion de Rayleigh.

Les différents capteurs à fibres optiques répartis sont utilisés chacun comme des capteurs de détection acoustique répartis. Il peut s'agir de capteurs à fibres monomodes (de préférence) ou multimodes.

Chaque capteur à fibre optique réparti est dédié à la mesure d'un degré de liberté de variation de déplacement au cours du temps de la conduite en chaque section transversale de celle-ci parmi les quatre degrés de liberté suivant : deux degrés en flexion, un degré en torsion et un degré en déplacement axial (à savoir compression ou tension axiale).

Dans la majorité des configurations, il est nécessaire de positionner quatre capteurs à fibres optique répartis autour de la conduite afin de ne pas mesurer des combinaisons (somme ou différence) de différents degrés de liberté. Par contre, dans le cas où l'on sait par avance que la conduite ne sera soumise qu'à un seul degré de liberté, un seul capteur à fibre optique sera nécessaire.

Une fois les capteurs à fibres optiques répartis installés autour de la conduite, on effectue une mesure continue de la variation de déplacement du capteur à fibre optique au cours du temps à l'aide de la technologie connue de la détection acoustique répartie , cette technologie étant appliquée ici à basse fréquence (c'est-à-dire entre 0,01 et 1Hz).

La technologie de détection acoustique répartie permet d'analyser les variations d'indices optiques le long des capteurs à fibres optiques par analyse de la lumière réfléchie par réflexion Rayleigh. Ces variations d'indices optiques peuvent être dues à des variations de température et à des variations de contraintes dans le cœur des fibres optiques. La vitesse très élevée de la lumière permet ainsi de détecter des variations de contrainte très rapides jusque dans le domaine ultrasonore et donc de détecter des ondes sonores ambiantes. Dans le cadre de la présente invention, on se limitera aux basses fréquences qui correspondent à la fréquence des vagues en mer et aux fréquences des détachements de tourbillons (typiquement entre 0,01Hz et 1Hz).

Les variations de contraintes au cours du temps en chaque point de la conduite sont alors déterminées à partir de la relation matricielle suivante :

$$\partial_t \overrightarrow{\epsilon(s)} = A(s)\partial_t \overrightarrow{x(s)}$$

dans laquelle :

$\partial_t \overrightarrow{\epsilon(s)}$ est un vecteur de taille 1 à 6 dont les composantes correspondent aux dérivés temporelles des déformations locales axiales respectives des capteurs à fibres optiques ;

$\partial_t \overrightarrow{x(s)}$ est un vecteur de même taille que $\partial_t \overrightarrow{\epsilon(s)}$ représentant les dérivées temporelles des éléments de réduction de la déformation au point de gravité G de la section de structure S correspondant à l'abscisse curviligne s de la fibre optique à mesurer sur la conduite ; et

A(s) est une matrice carrée dite « de déformation » qui est fonction de la position et de l'orientation angulaire des capteurs à fibres optiques localement sur la conduite, de l'abscisse curviligne s, de la géométrique de la conduite et de ses caractéristiques mécaniques.

Pour obtenir les variations de contraintes, il est nécessaire que les capteurs à fibres optiques soient installés autour de la conduite de telle sorte que la matrice de déformation A(s) soit inversible.

Différentes configurations d'installation des capteurs à fibres optiques sont envisageables afin de parvenir à ce que la matrice de déformation A soit inversible.

Les figures 1 à 4 représentent des exemples non limitatifs d'installations pour lesquels la matrice de déformation A(s) est inversible. Bien entendu, l'homme du métier pourra envisager d'autres configurations que celles décrites ci-après en liaison avec les figures 1 à 4.

Pour une configuration de positionnement de capteur à fibre optique donnée, il existe une seule matrice de déformation A(s) qui relie les déformations de la fibre optique à celles de la structure. Le positionnement d'un capteur à fibre optique sur la structure détermine un vecteur ligne de la matrice A de déformation (si x et $\epsilon$ sont des vecteurs colonne). Pour des structures de type tube et pour des capteurs à fibres optiques posés en hélice ou droite sur le tube les vecteurs lignes de la matrice de déformation A correspondante sont donnés ci-dessous. Pour une configuration de fibre donnée et selon les éléments de réduction du torseur de déformation que l'on souhaite déterminer la matrice de déformation A peut être ou non inversible.

Cas général :

On considère un tube de rayon extérieur r et l'on dispose sur celui-ci des capteurs à fibres optiques numérotés 1,2,... qui sont disposés soit en lignes droites soit en hélices autour de ce tube. Pour décrire la position des différentes fibres sur le tube on introduit les paramètres suivant :

- $\alpha$ est donné par la relation $\alpha = p/2\ \pi$ où p est le pas de l'hélice des capteurs à fibres optiques. Ce paramètre vaut +infini dans le cas d'une fibre droite.
- $\phi$ représente la position angulaire de chaque capteur à fibre optique sur la section de conduite à abscisse curviligne nulle
- $\psi$ est une variable valant +/-1 et décrivant le sens de rotation de l'hélice de chaque capteur à fibre optique autour de la conduite.
- s est l'abscisse curviligne liée à la fibre.

La position d'une fibre dans le repère de Fresnel ($G, \vec{T}, \vec{N}, \vec{B}$) est alors donnée par la relation suivante:

$$f(s) = \begin{pmatrix} \dfrac{\alpha s}{\sqrt{r^2 + \alpha^2}} \\ r cos\left(\psi \dfrac{s}{\sqrt{r^2 + \alpha^2}} + \phi\right) \\ r sin\left(\psi \dfrac{s}{\sqrt{r^2 + \alpha^2}} + \phi\right) \end{pmatrix}_{\vec{T},\vec{N},\vec{B}}$$

Dans le cas d'une fibre droite on trouve :

$$f(s) = \begin{pmatrix} s \\ r cos(\phi) \\ r sin(\phi) \end{pmatrix}_{\vec{T},\vec{N},\vec{B}}$$

Afin de décrire les déformations du tube et de la fibre on introduit les paramètres suivant, tous dépendent de l'abscisse curviligne:

- $\epsilon_1$, $\epsilon_2$, ... représentent les déformations axiales des fibres optiques 1,2,... respectivement.
- Les 6 degrés de libertés de déplacement de la structure en chaque point d'elle-même seront décrit par le torseur des déformations et de ses éléments de réduction de déformation, un vecteur déformation $\vec{e}$ et un gradient de rotation $\vec{k}$. Ces éléments s'écrivent en fonction d'un vecteur de déplacement du point de gravité de la section S(s) : $\vec{u}$ de composantes $u_1$, $u_2$ et $u_3$ et d'un vecteur rotation de la section S appliqué au point G de S : $\vec{r}$ de composantes $r_1$, $r2$, $r_3$.

Les dérivées par rapport à l'abscisse curviligne d'une grandeur g seront noté g'.
On établit que la déformation axiale d'une fibre en hélice sur un tube s'écrit en chaque point du tube en fonction des composantes des vecteurs déplacement et rotation du tube défini ci-dessus comme le produit scalaire de deux vecteurs. Un vecteur $\vec{x}$ dépendant des 6 degrés de liberté de mouvement du tube et un vecteur $A_i$ qui dépend des caractéristiques géométriques de la fibre ainsi que des coefficients de Lamé du tube $\lambda$ et $\mu$:

$$A_i = \begin{pmatrix} \dfrac{1}{r^2 + \alpha_i^2}\left(\alpha_i^2 - \dfrac{r^2\lambda}{2(\lambda+\mu)}\right) \\[2ex] \dfrac{-r\alpha_i\psi_i sin\left(\psi_i\dfrac{s}{\sqrt{r^2+\alpha_i^2}} + \phi_i\right)}{r^2+\alpha_i^2} \\[2ex] \dfrac{r\alpha_i\psi_i cos\left(\psi_i\dfrac{s}{\sqrt{r^2+\alpha_i^2}} + \phi_i\right)}{r^2+\alpha_i^2} \\[2ex] \psi_i \times \dfrac{\alpha_i r^2}{r^2+\alpha_i^2} \\[2ex] \dfrac{rsin\left(\psi_i\dfrac{s}{\sqrt{r^2+\alpha_i^2}} + \phi_i\right)}{r^2+\alpha_i^2}\left(\alpha_i^2 - \dfrac{r^2\lambda}{2(\lambda+\mu)}\right) \\[2ex] \dfrac{-rcos\left(\psi_i\dfrac{s}{\sqrt{r^2+\alpha_i^2}} + \phi_i\right)}{r^2+\alpha_i^2}\left(\alpha_i^2 - \dfrac{r^2\lambda}{2(\lambda+\mu)}\right) \end{pmatrix}$$

$$\vec{x} = \begin{pmatrix} u_1' \\ u_2' - r_3 \\ u_3' + r_2 \\ r_1' \\ r_2' \\ r_3' \end{pmatrix}$$

$$\epsilon_i = A_i\vec{x}$$

Le vecteur $\vec{x}$ est ainsi égal à la dérivée spatiale du vecteur déplacement du point de gravité de la section S(s), c'est-à-dire que nous avons : $\vec{x} = \partial_s\vec{u}$

Connaissant $\partial_t\overrightarrow{\epsilon(s)}$ par mesure des dérivées temporelles des deformations locales axiales des capteurs à fibre optique, et connaissant A, en inversant la matrice A on obtient $\partial_t\overrightarrow{x(s)}$ qu'on intègre par rapport au temps. Puis, par intégration spatiale (selon s), on obtient le vecteur de déplacement du point de gravité de la section S(s).

Dans le cas particulier d'une fibre droite :

$$A_i = \begin{pmatrix} 1 \\ 0 \\ 0 \\ 0 \\ rsin(\phi_i) \\ -rcos(\phi_i) \end{pmatrix}$$

Cette technique permet d'établir une relation matricielle en chaque abscisse curviligne entre la déformation du tube et celle des fibres sur celui-ci.

$$\vec{\epsilon} = A.\vec{x}$$

La matrice A ne dépend pas du temps. On peut donc écrire également :

$$\partial_t\vec{\epsilon} = A.\partial_t\vec{x}$$

Cette relation est importante car $\vec{\partial_t \epsilon}$ est la grandeur mesurée par les fibres.

Les vecteurs lignes de la matrice de déformation A sont les vecteurs $A_i$

En choisissant judicieusement l'agencement des capteurs à fibres optiques sur le tube, on peut obtenir l'inversibilité de la matrice de déformation A.

En pratique, sur les structures rigides on fait l'approximation des rotations de sections selon laquelle les composantes 2 et 3 du vecteur $\vec{x}$ sont nulles. Dans ce cas la matrice se réduit à la taille 4 et la mise en œuvre donne un exemple pour lequel la matrice de déformation A reste inversible. A l'inverse, si l'on choisit 4 fibres de même pas d'hélice, alors la matrice de déformation A n'est pas inversible.

Dans le cas particulier où l'on sait que le tube n'est soumis qu'à un seul type d'effort, par exemple la traction, la matrice de déformation peut se réduire au scalaire correspondant.

La mesure de la dérivée temporelle de déformation axiale des fibres optiques permet donc en chaque point du tube de déterminer toutes les composantes de la dérivée temporelle de déformation du tube, puis par intégration, les déplacements, positions ou les dérivées temporelles du torseur des contraintes, puis par intégration le torseur des contraintes. Comme la mesure est réalisée en tout point et en temps réel, il est possible également d'accéder à des grandeurs comme le dommage de la structure et donc la fatigue.

Cas particulier de mise en œuvre :

Dans un premier mode de réalisation illustré par la figure 1, les capteurs à fibres optiques répartis 2-1 à 2-4 sont avantageusement disposés en hélices autour de l'axe longitudinal X-X de la conduite 1, ce qui améliore leur adhésion mécanique sur la conduite.

Dans ce mode de réalisation, les capteurs à fibres optiques 2-1 à 2-3 sont positionnés en hélice de même pas p mais les positions angulaires initiales respectives de ces hélices sont décalées les unes par rapport aux autres de $2\pi/3$. Quant au quatrième capteur à fibre optique 2-4, il est positionné en hélice ayant un même pas p, une position angulaire initiale quelconque mais en sens inverse par rapport aux capteurs à fibres optiques 2-1 à 2-3.

En pratique, avec cette configuration en hélice, pour déterminer l'état des contraintes et de fatigue de la conduite en tout point de celle-ci, il convient de connaître la position hélicoïdale des capteurs à fibres optiques 2-1 à 2-4, cette position étant décrite en utilisant l'abscisse curviligne donnée par l'équation suivante (déjà mentionné ci-dessus) :

$$f(s) = \begin{pmatrix} \dfrac{\alpha s}{\sqrt{r^2 + \alpha^2}} \\ r cos\left(\psi \dfrac{s}{\sqrt{r^2 + \alpha^2}} + \phi\right) \\ r sin\left(\psi \dfrac{s}{\sqrt{r^2 + \alpha^2}} + \phi\right) \end{pmatrix}_{\vec{T},\vec{N},\vec{B}}$$

Toujours avec la configuration en hélice de la figure 1, le lien entre les déformations angulaires et axiales respectives $\epsilon_1$; $\epsilon_2$ ; $\epsilon_3$; $\epsilon_4$ des capteurs à fibres 2-1 à 2-4 et les déformations en chaque point de la conduite est donné, comme indiqué précédemment, par la relation matricielle :

$$\vec{\epsilon} = A\vec{x}$$

dans laquelle :

$$A = \left(a_{ij}\right)_{1 \le i,j \le 4}$$

$$\vec{\epsilon} = \begin{pmatrix} \epsilon_1 \\ \epsilon_2 \\ \epsilon_3 \\ \epsilon_4 \end{pmatrix}, \quad et \quad \vec{x} = \begin{pmatrix} u_1' \\ r_1' \\ r_2' \\ r_3' \end{pmatrix}$$

$$a_{i1} = \frac{1}{r^2 + \alpha_i^2}\left(\alpha_i^2 - \frac{r^2\lambda}{2(\lambda + \mu)}\right)$$

$$a_{i2} = \frac{\psi_i \alpha_i r^2}{r^2 + \alpha_i^2}$$

$$a_{i3} = \frac{r\sin\left(\frac{\psi_i s}{\sqrt{r^2 + \alpha_i^2}} + \phi_i\right)}{r^2 + \alpha_i^2}\left(\alpha_i^2 - \frac{r^2\lambda}{2(\lambda + \mu)}\right)$$

$$a_{i4} = \frac{-r\cos\left(\frac{\psi_i s}{\sqrt{r^2 + \alpha_i^2}} + \phi_i\right)}{r^2 + \alpha_i^2}\left(\alpha_i^2 - \frac{r^2\lambda}{2(\lambda + \mu)}\right)$$

Ainsi, pour la configuration du premier mode de réalisation de la figure 1, à partir de la connaissance des mesures de dérivée temporelle de déformation axiale des fibres optiques $\partial_t \vec{\epsilon}$, il est possible de déterminer les composantes recherchées de variations de déformation $\partial_x \vec{x}$ et les efforts. De plus, l'intégration de ces vecteurs en déplacement permet d'obtenir de proche en proche la position de chaque élément de la conduite, et donc l'état des contraintes et de fatigue de la conduite en temps réel.

Il est à noter qu'ici on fait l'approximation selon laquelle l'état de déplacement de la conduite selon les axes perpendiculaires à la génératrice de la conduite sont négligeables, ce qui permet de partir de l'hypothèse que $u_2' - r_3 = 0$ et $u_3' + r_2 = 0$ (et de simplifier les calculs car d'ordre inférieur). Seule la connaissance de la composante 1 du vecteur déplacement et des trois composantes du vecteur rotation permet ainsi d'obtenir les variations de contraintes.

Dans un deuxième mode de réalisation représenté sur la figure 2 permettant également d'obtenir une matrice de déformation A inversible, trois capteurs à fibres optiques 2-1 à 2-3 sont positionnés en hélice de même pas p mais les positions angulaires initiales respectives de ces hélices sont décalées les unes par rapport aux autres de $2\pi/3$ comme pour le premier mode de réalisation. De plus, le sens de ces hélices est changé à intervalles réguliers (par exemple tous les L mètres de la conduite). Pour la détermination de l'état des contraintes et de fatigue de la conduite, on considère ici que les mesures sont les mêmes sur deux sections de conduite consécutives, ce qui permet d'obtenir une approximation suffisamment bonne pour des conduites très longues (plusieurs km) lorsque L est choisi petit devant la longueur caractéristique de variation de la contrainte dans la structure.

Par rapport au premier mode de réalisation, cette installation présente l'avantage d'éviter tout chevauchement de capteurs à fibres optiques. En revanche, la résolution spatiale est limitée à 2L (au lieu de L pour le premier mode de réalisation). Bien entendu, ici aussi la matrice de déformation A est inversible, ce qui permet de déterminer l'état des contraintes et de fatigue de la conduite en temps réel.

Dans un troisième mode de réalisation, il est possible de mesurer les éléments de déformation $u_2' - r_3 = 0$ et $u_3' + r_2 = 0$ en ajoutant deux capteurs à fibres optiques supplémentaires 2-5 et 2-6.

La configuration représentée sur la figure 3 est un exemple permettant de mesurer les éléments de déformation $u_2' - r_3$ et $u_3' + r_2$.

Dans ce mode de réalisation, les trois capteurs à fibres optiques 2-1 à 2-3 sont positionnés autour de l'axe longitudinal X-X de la conduite 1 en hélice de même pas p mais les positions angulaires initiales respectives de ces hélices sont décalées les unes par rapport aux autres de $2\pi/3$. Quant aux trois capteurs à fibres optiques 2-4 à 2-6, ils sont positionnés également en hélice avec le même pas p et les mêmes décalage de positions angulaires initiales mais en sens inverse par rapport aux capteurs à fibres optiques 2-1 à 2-3.

Dans ce mode de réalisation, la matrice de déformation A est une matrice 6X6 qui est inversible, ce qui permet de déterminer par le biais des calculs précités l'état des contraintes et de fatigue de la conduite en temps réel.

La figure 4 représente un quatrième mode de réalisation de l'invention permettant aussi d'obtenir une matrice de déformation A inversible. Ici, les capteurs à fibres optiques sont au nombre de sept et sont positionnés de façon identique à ceux du troisième mode de réalisation avec un capteur à fibre optique droite supplémentaire (à savoir les trois capteurs à fibres optiques 2-1 à 2-3 sont positionnées autour de l'axe longitudinal X-X de la conduite 1 en hélice dans un sens et les trois capteurs à fibres optiques 2-4 à 2-6 sont positionnés en hélice en sens inverse).

Ce quatrième mode de réalisation se distingue du précédent en ce que l'installation comprend un capteur de pression à fibre optique 2-7 destiné à la mesure de la pression dans la conduite. Ici, le capteur à fibre optique de pression 2-7 est positionné en ligne droite, c'est-à-dire parallèlement à l'axe longitudinal X-X de la conduite. Ainsi, le capteur de pression à fibre optique est insensible au gonflement de la conduite sous la pression et ne subit que l'allongement de la conduite sous la pression. Elle permet donc d'obtenir par différence la pression en dynamique à l'intérieur de la conduite et donc la part des déformations dû à la pression interne.

On notera que ce capteur de pression à fibre optique peut alternativement être disposé en hélice autour de la conduite avec un pas différent de celui des capteurs à fibres optiques 2-1 à 2-6.

On notera également que ce capteur de pression à fibre optique peut être ajouté au premier mode de réalisation décrit en liaison avec la figure 1.

On notera encore qu'il est possible dans chacun des modes de réalisation précédemment décrits de mesurer la température le long de la conduite pour déterminer la déformation due aux variations de température le long de la conduite. A cet effet, il peut être prévu d'ajouter un capteur de température à fibre optique à côté de l'un des capteurs à fibres optiques répartis, le capteur de température à fibre optique étant interrogé par un système de détection de température réparti (ou DTS pour « Distributed Temperature Sensing ») et le capteur à fibre optique réparti étant interrogé par un système de détection acoustique réparti.

On notera encore qu'il est possible dans chacun des modes de réalisation précédemment décrits d'ajouter un capteur à fibre optique supplémentaire à côté de chacun des capteurs à fibres optiques pour obtenir la composante statique de l'état de déformation de la conduite à l'aide d'un système BOTDR (pour « Brillouin Optical Time Domain Reflectometry ») ou BOTDA (pour « Brillouin Optical Time Domain Analysis »). De tels systèmes permettent d'obtenir un état de déformation moyen sur une période supérieure à la minute par rapport à un état de référence donné.

On notera également que pour s'affranchir de nombreux systèmes de détection acoustique réparti (à savoir un système par capteur à fibre optique réparti), il est possible de positionner les capteurs à fibres optiques répartis en les reliant les uns aux autres (le capteur à fibre optique 2-1 étant relié à une extrémité de la conduite au système de détection acoustique réparti et à l'extrémité opposé au capteur à fibre optique 2-2 qui est lui-même relié à l'autre extrémité au capteur à fibre optique 2-3, etc.). Ainsi, un seul système de détection acoustique réparti est ici nécessaire pour l'interrogation de l'ensemble des capteurs à fibres optiques.

Enfin, on notera que les capteurs à fibres optiques répartis pourraient être installés en lignes droites autour de la conduite (c'est-à-dire parallèlement à l'axe longitudinal X-X de celle-ci).

## Revendications

**1.** Procédé de détermination des variations de contraintes au cours du temps d'une conduite sous-marine de transport de fluides assurant une liaison fond-surface ou une liaison entre deux supports flottant en vue d'en déduire les déplacements, les déformations, la fatigue, et les vibrations induites par détachement de tourbillons de la conduite, comprenant :

l'installation sur toute la longueur de la conduite (1) d'au moins un capteur à fibre optique réparti (2-1 à 2-4) utilisant la rétrodiffusion de Rayleigh, le capteur étant dédié à la mesure d'au moins un degré de liberté de variation de déplacement au cours du temps de la conduite en chaque section transversale de celle-ci ;

la mesure continue de la variation de **contraintes** du capteur à fibre optique au cours du temps ;

**caractérisé en ce qu'il comprend en outre** la détermination des déformations au cours du temps en chaque point de la conduite par intégration temporelle de la variation de contraintes du capteur à fibre optique mesuré à partir de la relation matricielle suivante : $\partial_t \overrightarrow{\in(s)} = A(s) \partial_t \overrightarrow{x(s)}$ dans laquelle :

s est l'abscisse curviligne de la fibre ;

$\partial_t \overrightarrow{\in(s)}$ est un vecteur de taille 1 à 6 dont les composantes correspondent aux dérivés temporelles des déformations locales axiales respectives des capteurs à fibres optiques ;

$\partial_t \overrightarrow{x(s)}$ est un vecteur de même taille que $\partial_t \overrightarrow{\in(s)}$ représentant les dérivées temporelles des éléments de réduction de la déformation prise au point de gravité de la section de structure correspondant à l'abscisse curviligne s à mesurer sur la conduite ; et

A(s) est une matrice de déformation qui est fonction de la position et de l'orientation angulaire des capteurs à fibres optiques localement sur la conduite, de l'abscisse curviligne s et des propriétés mécaniques et géométriques de la structure, les capteurs à fibres optiques étant installés de telle sorte que la matrice de déformation A(s) soit inversible.

**2.** Procédé selon la revendication 1, dans lequel les capteurs à fibres optiques répartis sont installés en hélice autour de la conduite.

**3.** Procédé selon la revendication 1, dans lequel les capteurs à fibres optiques répartis sont installés en lignes droites autour de la conduite.

**4.** Procédé selon l'une quelconque des revendications 1 à 3, comprenant l'installation sur toute la longueur de la conduite d'au moins quatre capteurs à fibres optiques répartis dédiés à la mesure simultanée de trois degrés de liberté en rotation et d'un degré de liberté en déplacement de la conduite en chaque section transversale de celle-ci.

**5.** Procédé selon l'une quelconque des revendications 1 à 4, comprenant en outre l'installation sur toute la longueur de la conduite d'un capteur de pression à fibre optique (2-7) destiné à la mesure de la pression dans la conduite.

**6.** Procédé selon la revendication 5, dans lequel le capteur de pression à fibre optique est disposé en ligne droite parallèlement à un axe longitudinal (X-X) de la conduite ou en hélice autour de la conduite.

**7.** Procédé selon l'une quelconque des revendications 1 à 6, comprenant en outre l'installation sur toute la longueur de la conduite d'un capteur de température à fibre optique destiné à la mesure de la température dans la conduite.

**8.** Procédé selon l'une quelconque des revendications 1 à 7, comprenant en outre la détermination des déplacements au cours du temps en chaque point de la conduite par intégrations temporelle et spatiale de la variation de contraintes mesuré du capteur à fibre optique situé sur la section correspondante du point de la conduite.

## Patentansprüche

**1.** Verfahren zur Bestimmung von Belastungsveränderungen einer Unterwasserleitung für den Transport von Fluiden über den zeitlichen Verlauf, welche eine Verbindung vom Grund zur Oberfläche oder eine Verbindung zwischen zwei schwimmenden Trägern sicherstellt, um daraus die Verschiebungen, die Verformungen, die Ermüdung und die Vibrationen abzuleiten, die durch Wirbelablösung von der Leitung induziert werden, umfassend:

die Installation zumindest eines verteilten faseroptischen Sensors (2-1 bis 2-4), der die Rayleigh-Rückstreuung verwendet, über die gesamte Länge der Leitung (1), wobei der Sensor für die Messung zumindest eines Freiheitsgrades der Veränderung der Verschiebung der Leitung in jedem Querschnitt derselben über den zeitlichen Verlauf vorgesehen ist,
die kontinuierliche Messung der Belastungsveränderung des faseroptischen Sensors über den zeitlichen Verlauf,
**dadurch gekennzeichnet, dass** es ferner die Bestimmung der Verformungen über den zeitlichen Verlauf an jedem Punkt der Leitung durch Integration der gemessenen Belastungsveränderung des faseroptischen Sensors über die Zeit umfasst, ausgehend von der folgenden Matrizen-Beziehung $\partial_t \overrightarrow{\in(s)} = A(s)\partial_t \overrightarrow{x(s)}$, in welcher:

s die gekrümmte Abszisse der Faser ist,
$\partial_t \overrightarrow{\in(s)}$ ein Vektor der Größe 1 bis 6 ist, dessen Komponenten den Ableitungen der jeweiligen lokalen axialen Verformungen der faseroptischen Sensoren über die Zeit entsprechen,
$\partial_t \overrightarrow{x(s)}$ ein Vektor derselben Größe wie $\partial_t \overrightarrow{\in(s)}$ ist und die Ableitungen über die Zeit der Elemente der Verringerung der Verformung darstellt, die an dem Schwerpunkt der Sektion der Struktur entsprechend der gekrümmten Abszisse s genommen wurde, die an der Leitung gemessen werden soll, und
A(s) eine Matrix der Verformung ist, die eine Funktion der Position und der Winkelorientierung der faseroptischen Sensoren lokal an der Leitung, der gekrümmten Abszisse s und der mechanischen und geometrischen Eigenschaften der Struktur ist, wobei die faseroptischen Sensoren auf solche Weise installiert sind, dass die Matrix der Verformung A(s) invertierbar ist.

2. Verfahren nach Anspruch 1, wobei die verteilten faseroptischen Sensoren spiralförmig um die Leitung herum installiert sind.

3. Verfahren nach Anspruch 1, wobei die verteilten faseroptischen Sensoren in geraden Linien um die Leitung herum installiert sind.

4. Verfahren nach einem der Ansprüche 1 bis 3, umfassend die Installation von zumindest vier verteilten faseroptischen Sensoren über die gesamte Länge der Leitung, die zur gleichzeitigen Messung von drei Freiheitsgraden der Drehung und einem Freiheitsgrad der Verschiebung der Leitung in jedem Querschnitt derselben vorgesehen sind.

5. Verfahren nach einem der Ansprüche 1 bis 4, ferner umfassend die Installation eines faseroptischen Drucksensors (2-7), der zur Messung des Drucks in der Leitung bestimmt ist, über die gesamte Länge der Leitung.

6. Verfahren nach Anspruch 5, wobei der faseroptische Drucksensor in einer geraden Linie parallel zu einer Längsachse (X-X) der Leitung oder spiralförmig um die Leitung herum angeordnet ist.

7. Verfahren nach einem der Ansprüche 1 bis 6, ferner umfassend die Installation eines faseroptischen Temperatursensors, der zur Messung der Temperatur in der Leitung bestimmt ist, über die gesamte Länge der Leitung.

8. Verfahren nach einem der Ansprüche 1 bis 7, ferner umfassend die Bestimmung der Verschiebungen über den zeitlichen Verlauf an jedem Punkt der Leitung durch Integration der Belastungsveränderung, die von dem faseroptischen Sensor gemessen wird, der sich an der entsprechenden Sektion des Punkts der Leitung befindet, über die Zeit und den Raum.

**Claims**

1. A method of determining stress variations over time in a fluid transport undersea pipe and providing a bottom-to-surface connection or a connection between two floating supports, the stress variations being suitable for deducing the movements, the deformations, the fatigue, and the vortex induced vibration of the pipe, the method comprising:

   installing along the entire length of the pipe (1) at least one distributed optical fiber sensor (2-1 to 2-4) using Rayleigh backscattering, the sensor being dedicated to measuring at least one degree of freedom of movement variation over time of the pipe in each cross section of the pipe;
   continuously measuring the stress variations of the optical fiber sensor over time;
   **characterised in that** it further comprises determining deformations over time at each point of the pipe by time integration of the stress variation of the optical fiber sensor on the basis of the following matrix relationship:

$$\partial_t \overrightarrow{\epsilon(s)} = A(s)\, \partial_t \overrightarrow{x(s)}$$

   in which:

   s is the curvilinear abscissa of the fiber;
   $\overrightarrow{\partial_t \epsilon(s)}$ is a vector of dimension 1 to 6, in which the components correspond to the time derivatives of the respective axial local deformations of the optical fiber sensors;
   $\overrightarrow{\partial_t x(s)}$ is a vector having the same dimension as $\partial_t \overrightarrow{\epsilon(s)}$ representing the time derivatives of the deformation reduction elements at the center of gravity of the structure section corresponding to the curvilinear abscissa s for measuring on the pipe; and
   A(s) is a deformation matrix that is a function of the local positions and angular orientations of the optical fiber sensors on the pipe, of the curvilinear abscissa s, and of the mechanical and geometrical properties of the structure, the optical fiber sensors being installed in such a manner that the deformation matrix A(s) is invertible.

2. A method according to claim 1, wherein the distributed optical fiber sensors are installed helically around the pipe.

3. A method according to claim 1, wherein the distributed optical fiber sensors are installed in straight lines around the pipe.

4. A method according to any one of claims 1 to 3, comprising installing along the entire length of the pipe at least four distributed optical fiber sensors dedicated to measuring three degrees of freedom in rotation simultaneously with measuring one degree of freedom in movement of the pipe at each cross section of the pipe.

5. A method according to any one of claims 1 to 4, further comprising installing along the entire length of the pipe an optical fiber pressure sensor (2-7) for measuring pressure in the pipe.

6. A method according to claim 5, wherein the optical fiber pressure sensor is arranged in a straight line parallel to the longitudinal axis (X-X) of the pipe or helically around the pipe.

7. A method according to any one of claims 1 to 6, further comprising installing along the entire length of the pipe an optical fiber temperature sensor for measuring temperature in the pipe.

8. A method according to any one of claims 1 to 7, further comprising determining the movements over time at each point of the pipe by time and spatial integration of the measured stress variation of the optical fiber sensor situated on the section corresponding to the point of the pipe.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3047308
- FR 3047309
- US 20160161350 A
- WO 2014013244 A
- US 20170102278 A
- US 20150285626 A